# EUROPÄISCHE PATENTANMELDUNG

(11) **EP 4 406 883 A1**
(43) Veröffentlichungstag der Anmeldung: **31.07.2024**
(21) Anmeldenummer: 24154653.0
(22) Anmeldetag: 30.01.2024
(51) Int. Cl.: B65G 15/02, B65G 15/64, B65G 21/06, B65G 21/16

(54) **GURTNIEDERHALTER UND GURTFÖRDERER**

(30) Priorität: 30.01.2023 DE 102023102117
(71) Anmelder: Schmid Systemtechnik GmbH, 67547 Worms (DE)
(72) Erfinder: SCHWARZ, Philip, Worms (DE)
(74) Vertreter: Zellentin & Partner mbB Patentanwälte

(57) **Zusammenfassung**

Die Erfindung betrifft einen Gurtniederhalter (10) für einen Gurtförderer (60), wobei auf einem längserstreckten Montageelement (12) wenigstens zwei Halteelementpaare (16, 18) in Richtung seiner Längserstreckung gesehen hintereinander angeordnet sind, wobei jedes Haltelementpaar (16, 18) ein erstes (20) und ein zweites Halteelement (26) aufweist, wobei das jeweils erste Halteelement (20) näher zu einer ersten Stirnseite (48) des Montageelementes (12) gelegen ist als das jeweils zweite Halteelement (26) eines Halteelementpaares (16, 18), und wobei das erste (20) und zweite Halteelement (26) eines Halteelementpaares (16, 18) in einer Geschlossenstellung einen vorgegebenen lichten Abstand (41) zueinander haben.

Zudem ist eine längserstreckte Tragschiene (14) mit dem Montageelement (12) verbunden, so dass deren gedachten Achsen ihrer Längserstreckung parallel zueinander gelegen sind. Weiterhin ist die Tragschiene (14) in Richtung ihrer Längserstreckung bedarfsweise relativ zum Montageelement (12) verschiebbar und die jeweils ersten Halteelemente (20) sind mit der Tragschiene (14) verbunden. Die jeweils zweiten Halteelemente (26) sind mit dem Montagelement (12) verbunden und die Tragschiene (14) ist an wenigstens einer vorbestimmten Position mittels erster Verbindungsmittel an dem Montageelement (12) fixierbar ist, so dass die ersten (20) und zweiten Halteelemente (26) wenigstens mit dem vorgegeben lichten Abstand (41) zueinander fixierbar sind. Außerdem betrifft die Erfindung einen Gurtförderer (60) bei dem die erfindungsgemäßen Gurtniederhalter (10) eingesetzt werden.

## Beschreibung

Die Erfindung betrifft einen Gurtniederhalter für einen Gurtförderer, wobei auf einem längserstreckten Montageelement wenigstens zwei Halteelementpaare in Richtung der Längserstreckung gesehen hintereinander angeordnet sind, wobei jedes Halteelementpaar ein erstes und ein zweites Halteelement aufweist, wobei das jeweils erste Halteelement näher zu einer ersten Stirnseite des Montageelementes gelegen ist als das jeweils zweite Halteelement eines Halteelementpaares, wobei das erste und das zweite Halteelement eines Halteelementpaares in einem Betriebszustand einen vorgegebenen lichten Abstand zueinander haben. Die Erfindung betrifft zudem einen Gurtförderer mit einem erfindungsgemäßen Gurtniederhalter.

Es ist allgemein bekannt, dass bei den Stetigförderern in der Fördertechnik die Gurtförderer eine wichtige Rolle spielen. In der Regel wird dabei ein Endlosgurt an jedem Ende einer Förderstrecke um eine Umlenktrommel geführt, wobei üblicherweise einer der Umlenktrommeln einen Antrieb hat und dann häufig als Antriebstrommel bezeichnet wird. Zum Übertragen der Antriebskräfte von der Antriebstrommel auf den Gurt ist eine vorgebbare Vorspannung erforderlich. Zwischen diesen beiden Rollen sind häufig eine Anzahl von Tragrollen angebracht, die den Gurt stützen, wobei die Gurtführung des Gurtes im Obertrum - dem in geodätischer Richtung oben gelegenen Teil des Gurtes - häufig flach oder gemuldet ist, während die Gurtführung im Untertrum in der Regel flach oder leicht gemuldet ist.

Um einen kontinuierlichen Förderfluss auch bei Richtungsänderungen der Gesamtförderstrecke zu gewährleisten, ist diese in verschiedene separate Förderstrecken unterteilt, die jeweils einen eigenen Gurt mit Antriebstrommel aufweisen. Für Förderstrecken mit Richtungsänderungen werden in der Regel Gurtkurven als Bauausführungen von Gurtförderern eingesetzt, die entsprechende Radien, Winkel und Fördergeschwindigkeiten auf die Bedürfnisse der Gesamtanlage angepasst sind.

Ein Grundprinzip einer Gurtkurve mit einer horizontalen Richtungsänderung ist ein kegelförmig geschnittener Gurt, der mit einer konisch geschnittenen Antriebstrommel sowie einer konisch geschnittenen Umlenktrommel in einer Ebene gespannt ist. Die Gurtspannung ist dabei über die Ausrichtung von Lagerblöcken der Trommeln einstellbar. Durch die Geometrie dieser Anordnung entstehen Kräfte, die den Gurt in Richtung eines Kreismittelpunktes ziehen, der dem Kreismittelpunkt eines gedachten Kreises entspricht, auf dem die Kurve der Richtungsänderung liegt. Die auftretenden Kräfte werden dabei von den Gurtkanten auf Niederhalter übertragen, die am Grundrahmen der Förderstrecke angebracht sind. Die Gurtkanten weisen dazu häufig auf diese aufgenähte oder aufgeklebte Gurtkantenprofile auf, sodass eine resultierende Gurtkantendicke größer als die eigentliche Gurtdicke ist.

Ein solcher Niederhalter ist als Halteelement aus der deutschen Patentanmeldung DE 195 35 384 A1 bekannt geworden, bei dem ein Gurtkantenprofil eines Gurtes im Obertrum zwischen einer Trag- und einer Führungsrolle gehalten ist, wobei jede Rolle in einem separaten Teil des Halteelements angebracht ist, wobei die Teile zur Montage/Demontage lösbar miteinander verbunden sind. Für das Gurtkantenprofil des Untertrums ist ein entsprechendes Halteelement vorgesehen. Nachteilig bei diesem Stand der Technik ist es, dass ein vergleichsweise hoher Erstmontageaufwand bzw. ein hoher Montage-/Demontageaufwand beim Wechseln eines Fördergurt für einen derartigen Niederhalter besteht.

Zudem ist aus dem Dokument US 9,120,628 B2 ein Gurtförderer, der gekurvt ist, bekannt geworden, bei dem die Trag- und die Führungsrollen sowohl des Obertrums als auch des Untertrums auf einer gemeinsamen U-Schiene montiert sind. Zudem sind die jeweils geodätisch oben angeordneten Führungsrollen um einen vorgegebenen Winkel um eine Schwenkachse verschwenkbar. Auf diese Weise soll das Wechseln des Fördergurtes vereinfacht werden, weil die Führungsrollen vergleichsweise einfach von einer ersten Position "geschlossen" in eine zweite Position "geöffnet" verschwenkt werden können. Bei diesem Gurtförderer ist der Erstmontageaufwand für ein Niederhalter zwar verbessert, jedoch bleibt Demontageaufwand z.B. für das Wechseln eines Fördergurt vergleichsweise hoch, da die innen liegenden Rollen zwischen dem Ober- und dem Untertrum nur vergleichsweise schwer erreichbar sind.

Ausgehend von diesem Stand der Technik ist es Aufgabe der Erfindung, einen Gurtniederhalter sowie einen Gurtförderer anzugeben, bei dem der Montage- bzw. der Demontageaufwand für das Wechseln eines Fördergurtes weiter verringert ist.

Die Aufgabe wird gelöst durch einen Gurtniederhalter der eingangs genannten Art. Dieser ist dadurch gekennzeichnet, dass eine Tragschiene mit dem Montageelement verbunden ist, so dass deren gedachte Längsachsen parallel zueinander gelegen sind, dass die Tragschiene in Richtung ihrer Längserstreckung bedarfsweise relativ zum Montageelement verschiebbar ist, dass die jeweils ersten Halteelemente mit der Tragschiene verbunden sind, dass die jeweils zweiten Halteelemente mit dem Montagelement verbunden sind, dass die Tragschiene an wenigstens einer vorbestimmten Position mittels erster Verbindungsmittel an dem Montageelement fixierbar ist, so dass die ersten und zweiten Halteelemente wenigstens mit dem vorgegeben lichten Abstand fixierbar sind.

Eine Grundidee der Erfindung besteht darin, dass das erste Halteelement jedes Halteelementpaares gemeinsam verschiebbar sind und derart gleichzeitig das erste Halteelement für den Obertrum sowie das erste Halteelement für den Untertrum jedes Gurtniederhalters, beispielsweise bei der Demontage des Fördergurtes, von einer ersten Position in eine zweite Position verschiebbar sind. Auf diese Weise sind die Halteelementpaare für den Ober- sowie für den Untertrum gleichzeitig nach einer Montage des Fördergurtes schließbar - dann in eine Geschlossenstellung verbracht - bzw. für die Montage und Demontage des Fördergurtes öffenbar. Wenn die Halteelemente eines Halteelementpaares den vorgegebenen lichten Abstand aufweisen, befinden sich die Halteelemente im geschlossenen Zustand oder Betriebszustand für den Gurtförderer, sodass dieser seine Förderaufgabe erfüllen kann. Dazu ist der vorgegebene lichte Abstand so bemessen, dass dieser kleiner ist als eine maximale Dicke eines Gurtkantenprofils, sodass im Betriebsfall des Gurtförderers verhindert ist, dass das Gurtkantenprofil und damit die Gurtkante zwischen einem Halteelementpaar in radialer Richtung einer Gurtkurve des Fördergurtes gesehen hindurchgleiten kann. In der Regel ist der vorgegebene lichte Abstand mit einer Spielpassung auf die Dicke des Fördergurtes beziehungsweise des Gurtkantenprofiles des Gurtförderers angepasst. Wird beispielsweise ein Gurtwechsel notwendig, können vorteilhafterweise wiederum alle Halteelementpaare eines erfindungsgemäßen Gurtniederhalters, also die für den Obertrum sowie die für den Untertrum gemeinsam und gleichzeitig geöffnet werden, so dass der lichte Abstand zwischen den Halteelementen der Halteelementpaare so weit vergrößert ist, dass das Gurtkantenprofil nun zwischen den Halteelementen hindurchführbar ist. Auf diese Weise wird besonders vorteilhaft die Demontage- sowie die Montagezeit bei einem Gurtwechsel verringert. Das seitherige separate Öffnen oder Demontieren einzelner Halteelemente jedes Halteelementpaares entfällt vorteilhafterweise vollständig.

Eine andere Grundidee des erfindungsgemäßen Gurtniederhalters ist die Möglichkeit, dass das erste Halteelement für den Obertrum sowie das erste Halteelement für den Untertrum jedes Gurtniederhalters, beispielsweise bei der Demontage des Fördergurtes, von nur einer Seite aus, hier der Stirnseite, als Bedienseite des Gurtniederhalters für beide ersten Halteelemente von der_ ersten Position in die zweite Position zu verbringen. Bereits hierdurch ist der Montage- oder Demontageaufwand beispielsweise bei einem Wechsel des Fördergurtes erheblich reduziert.

Eine vorteilhafte Ausgestaltung des Gurtniederhalters sieht vor, dass das erste Halteelement als erste Rolle oder als erste Gleitschiene und/oder das zweite Halteelement als zweite Rolle oder als zweite Gleitschiene ausgestaltet ist. Je nach den technischen Erfordernissen wird für eine gewünschte möglichst kleine Berührfläche zwischen einem Halteelement und einem Fördergurt bzw. einem Gurtkantenprofil eher eine Rolle gewählt oder für eine gewünschte möglichst große Berühr- beziehungsweise Gleitfläche zwischen einem Halteelement und einem Fördergurt bzw. einem Gurtkantenprofil eher eine Gleitschiene gewählt werden.

Eine Fortbildung des Gurtniederhalters ist dadurch gekennzeichnet, dass die ersten und/oder die zweiten Rollen drehbeweglich gelagert sind. Auf diese Weise werden eventuell auftretende Reibungskräfte zwischen den Rollen und dem Fördergurt bzw. dem Gurtkantenprofil in vorteilhafter Weise minimiert. Dazu sind beispielsweise Kugel-, Wälz- oder Gleitlager vorgesehen. Wenn ein Halteelement als drehbeweglich gelagerte Rolle ausgestaltet ist, soll auch diese Ausgestaltung als Halteelement gemeint sein, auch wenn bei einer drehbeweglichen Rolle ein Anteil eines Gleitens zwischen dem Gurtkantenprofil und der drehbeweglichen Rolle dann geringer ist oder entfällt, also ggf. nur ein Abrollen der Rolle auf dem Gurtkantenprofil stattfindet.

Ein erfindungsgemäßer Gurtniederhalter kann auch so ausgestaltet sein, dass eine radial nach außen weisende Kontaktfläche der ersten und/oder der zweiten Rollen als Querschnittsform in radialer Richtung gesehen eine gerade, eine konkav geformte, eine konvex geformte oder eine freigeformte Strecke ist. Auf diese Weise lassen sich die Reibungskräfte zwischen den Rollen und dem Fördergurt bzw. dem Gurtkantenprofil vorteilhaft optimieren, insbesondere verringern. Entsprechendes gilt für die Ausgestaltung der Kontaktfläche der ersten und/oder zweiten Gleitschiene in deren longitudinaler Erstreckungsrichtung.

Eine weitere Ausgestaltung des Gurtniederhalters sieht vor, dass die ersten und/oder die zweiten Halteelemente unter Zwischenfügung einer Lagerplatte oder eines Lagerbocks mit der Tragschiene beziehungsweise dem Montagelement verbunden sind. Damit sind die Lagerplatte, die Lagerung und die Halteelemente separate Bauelemente, so dass die konstruktive Ausgestaltung der Tragschiene vereinfacht ist. Zu anderen lässt sich durch einfache Anpassung der Ausrichtung der Lagerplatte bzw. des Lagerbocks die Neigung der Halteelemente besonders einfach verändern bzw. auf ein Gurtkantenprofil anpassen.

Ein besonders bevorzugter Gurtniederhalter ist so ausgestaltet, dass jede Lagerplatte eines ersten Halteelementes eine Schwenklagerplatte ist, dass jede Schwenklagerplatte im Randbereich einer Schwenkplattenstirnseite, die am weitesten von der Stirnseite gelegen ist, eine Drehwelle aufweist, dass die Drehwelle in den Seitenteilen oder in einem mit der Bodenplatte verbundenen Drehwellenhalter verschwenkbar gelagert ist, dass eine gedachte Drehachse der Drehwelle parallel zu einer von der Bodenplatte definierten Ebene sowie senkrecht zur Verschieberichtung der Tragschiene gelegen ist, dass jede Schwenklagerplatte wenigstens eine zu einer Seitenwand der Tragschiene weisenden Führungsnase aufweist, dass in jeder der zwei Seitenwände der Tragschiene von der zur Stirnseite näher gelegenen Schwenklagerplatte ein erstes Langloch angeordnet ist, dass in jeder der beiden Seitenwände von der zur Stirnseite weiter entfernt gelegenen Schwenklagerplatte ein zweites Langloch angeordnet ist, dass die ersten und zweiten Langlöcher so positioniert sind, dass die wenigstens eine Führungsnase der einen Schwenklagerplatte in wenigstens einem ersten Langloch und die wenigstens eine Führungsnase der anderen Schwenklagerplatte in wenigstens einem zweiten Langloch gelegen ist, dass die Langlöcher eine solche Gestalt aufweisen, dass durch die relative Verschiebung der Tragschiene zum Montageelement je nach Verschieberichtung die Führungsnasen in den Langlöchern entlangbewegt sind und derart die Schwenklagerplatten entsprechend hin- oder herverschwenkt sind.

Bei dieser Ausgestaltungsvariante ist es vorteilhaft, dass die Hin- oder Herbewegung der Tragschiene im Montageelement zum Öffnen oder zum Schließen der Halteelementpaare, konstruktiv umgesetzt ist in eine Schwenk- oder Kippbewegung der Schwenklagerplatte. Dabei vergrößert sich der lichte Abstand zwischen zwei Halteelementen eines Halteelementpaares durch ein Wegschwenken des ersten Halteelementes um die Drehwelle. In dieser offenPosition kann beispielsweise ein zwischen den Halteelementen gelegener Fördergurt entfernt werden. In einem anderen Fall wird dann die Bewegung der Tragschiene in ein Hinschwenken des ersten Halteelements zum zweiten Halteelement umgesetzt, sodass der lichte Abstand zwischen den beiden Halteelementen der vorgegebene lichte Abstand ist, in dem ein zwischen den Halteelementen gelegener Gurt durch den Gurtniederhalter positioniert und geführt ist. Für die Formgebung der Langlöcher sind praktisch keine Grenzen gesetzt, solange die gewünschte technische Funktion erfüllt ist. Zudem ist bei dieser Ausgestaltungsvariante des Gurtniederhalters die Veranlassung des Öffnens oder des Schließens der Rollenpaar vorteilhafterweise wiederum von nur einer Seite aus, nämlich der Stirnseite, ermöglicht.

Eine Weiterbildung des vorstehenden Gurtniederhalters ist dadurch gekennzeichnet, dass die zwei ersten Langlöcher die gleiche Gestalt aufweisen, dass die zwei zweiten Langlöcher die gleiche Gestalt aufweisen, dass die ersten oder zweiten Langlöcher eine kreisbogenabschnittsförmige oder eine gerade Gestalt oder eine Kombination dieser Gestalten aufweisen, und dass ein erstes Ende eines jeden Langloches näher zur Bodenplatte gelegen ist als ein zweites Ende des betreffenden Langloches. Bei dieser Weiterbildung des Gurtniederhalters können für die ersten Langlöcher und die zweiten Langlöcher unterschiedliche Formen gewählt werden. Das eröffnet die Möglichkeit, beispielsweise für die Bewegung der einen Schwenklagerplatte gerade Langlöcher zu wählen und für die andere Schwenklagerplatte kreisbogenabschnittsförmige Langlöcher zu wählen. Das bedeutet, dass die Schwenkbewegung der Schwenklagerplatten unterschiedlich ist, bei einer bestimmten Strecke entlang der die Tragschiene hin- oder herbewegt wird. Somit kann der Gurtniederhalter besonders einfach einer entsprechenden technische Anforderung durch einfaches Anpassen der Form der Langlöcher entsprochen werden.

Eine besonders vorteilhafte Weiterbildung des Gurtniederhalter sieht zudem vor, dass die ersten Langlöcher eine kreisbogenabschnittsförmige oder eine gerade Gestalt haben, dass die zweiten Langlöcher einen Abschnitt mit einer kreisbogenabschnittsförmigen oder geraden Gestalt haben an den sich ein weiteren Abschnitt mit einer geraden Gestalt anschließt, dass der weitere Abschnitt an einem am weitesten von der Bodenplatte entfernten Ende des einen Abschnitts anschließt und dass der weitere Abschnitt parallel zur Verschieberichtung der Tragschiene gelegen ist.

Ein besonderer Vorteil ist hier erreicht durch den weiteren Abschnitt, der parallel zur Verschieberichtung der Tragschiene gelegen ist. Mit einem solchen parallelen Abschnitt kann ein zeitversetztes Öffnen oder Schließen, damit ein zeitversetztes Verschwenken der einen Schwenklagerplatte im Vergleich zur anderen Schwenklagerplatte erreicht werden. Je nachdem, welche der Langlöcher mit einem weiteren Abschnitt versehen ist, verschwenkt bei einer Bewegung der Tragschiene in eine Richtung zunächst die eine Schwenklagerplatte. Dann kann die Bewegung der Tragschiene sogar angehalten werden, sodass beispielsweise die eine Schwenklagerplatte bereits in die Position "offen" verschwenkt ist, während sich die andere Schwenklagerplatte noch in der Position geschlossen befindet. Wird die Tragschiene weiter in die Richtung bewegt, verschwenkt auch die andere Schwenklagerplatte in die Position "offen". Bei einer Bewegung der Tragschiene dann in die andere Richtung, verschwenken die Schwenklagerplatte entsprechend und zeitversetzt in umgekehrter Reihenfolge.

Ein Gurtniederhalter wird weiter verbessert, indem ein Winkel zwischen einer gedachten Symmetrieachse des ersten und/oder des zweiten Halteelements sowie der Richtung der Längserstreckung des Montageelements einstellbar ist. Das ist insbesondere dann von Vorteil, wenn beispielsweise im Zuge eines Gurtwechsels ein anderes Gurtkantenprofil bei dem neuen Fördergurt verwendet ist. Dann ist es durch ein Einstellen eines neuen Winkels für die Rollen besonders einfach möglich, eine optimale Position für die Rollen im Betrieb zu erreichen.

Eine weitere Ausgestaltung des Gurtniederhalter ist dadurch gekennzeichnet, dass die ersten Verbindungsmittel wenigstens eine Schraub-, Rast- und/oder Klemmverbindung sind. Mit solchen standardisierten Verbindungsmitteln bzw. Verbindungselementen lassen sich besonders sichere und funktionale Verbindungen zwischen der Tragschiene und dem Montageelement herstellen. Die verschieden Verbindungsarten lassen sich auch besonders vorteilhaft kombinieren. So kann beispielsweise eine federbelastete Kugel in einer Ausnehmung verrastet werden und derart eine Positionierung der Tragschiene an dem Montageelement erreicht sein. Zudem kann dann mit einer Schraubverbindung eine zusätzliche redundante Verbindung zwischen Tragschiene und Montageelement in der bereits fixierten Position hergestellt werden.

Eine besonders vorteilhafte Ausgestaltung des Gurtniederhalters sieht vor, dass in der Tragschiene wenigstens ein Durchgangsloch oder/und ein Langloch sowie im Montageelement wenigstens ein Langloch und/oder ein Durchgangsloch derart angeordnet sind, dass mit einer Schraube, die durch eine korrespondierende Durchgangsloch/Langloch-Kombination im Montageelement und der Tragschiene geführt ist, dass die relative Verschiebung der Tragschiene zum Montageelement durch eine Länge des wenigstens einen Langloches begrenzt ist, und dass mit einer Schrauben/Mutter-Kombination als Schraubverbindung die Tragschiene an jeder beliebigen Position innerhalb der relativen Verschiebung an dem Montageelement fixierbar ist. Eine Länge des Langlochs gibt dabei also die maximale Länge der Verschiebemöglichkeit der Tragschiene relativ zum Montageelement vor und begrenzt die Verschiebung entsprechend. Zudem sind es gleichwertige technische Lösungen, wenn entweder eine Kombination von wenigstens einem Langloch in dem Montageelement und wenigstens ein korrespondierendes Durchgangsloch in der Tragschiene gewählt ist oder eine Kombination von wenigstens einem Langloch in der Tragschiene und wenigstens einem korrespondierenden Durchgangsloch im Montageelement. In beiden Kombinationsmöglichkeiten ist dieselbe vorteilhafte Ausgestaltung erreicht.

Als alternative Ausgestaltung der ersten Verbindungsmittel für den Gurtniederhalter ist es vorgesehen, dass die Tragschiene mit wenigstens einem Rastelement ausgestattet ist, und dass wenigstens zwei zweite Ausnehmungen je Rastelement am Montageelement so angeordnet sind, dass eine Rastnase bedarfsweise in der einen oder anderen zweiten Ausnehmung einrastbar ist. Dabei entspricht die Position der Tragschiene, wenn die Rastnase in der einen zweiten Ausnehmung angeordnet ist, einer Geöffnetstellung für ein Halteelementpaar und wenn die Rastnase in der anderen zweiten Ausnehmung angeordnet ist, entspricht das der Position der Tragschiene in der Geschlossenstellung, so dass jedes Halteelementpaar den vorgegebenen lichten Abstand aufweist. Auf diese vorteilhafte Weise ist das Verschieben der Tragschiene sowie die Positionierung in zwei festgelegten Positionen besonders einfach technisch verwirklicht.

Eine besonders vorteilhafte Ausgestaltung des Gurtniederhalters ist dadurch gekennzeichnet, dass auf dem Montageelement wenigstens zwei weitere Halteelementpaare in Richtung der Längserstreckung der Tragschiene gesehen hintereinander angeordnet sind, dass die wenigstens zwei weiteren Halteelementpaare in Quererstreckung der Tagschiene gesehen neben den wenigstens zwei Halteelementpaaren angeordnet sind, dass die jeweils ersten Halteelemente der weiteren Halteelementpaare mit der Tragschiene verbunden sind, und dass die jeweils zweiten Halteelemente der weiteren Halteelementpaare mit dem Montagelement verbunden sind. Mit dieser Ausgestaltung ist es ermöglicht, zwei oder mehrere Halteelementpaare sowohl für den Obertrum als auch für den Untertrum in Bewegungsrichtung eines Fördergurtes nebeneinander anzuordnen, wobei alle Halteelementpaare durch ein Montageelement gehalten sind. Außerdem ist es erfindungsgemäß gewährleistet, dass alle ersten Halteelemente aller Halteelementpaare durch wenigstens eine Tragschiene hin und her bewegt werden können und alle zweiten Halteelemente aller Halteelementpaare mit dem Montageelement verbunden sind. Auf diese Weise ist auch der erfindungsgemäße Vorteil gegeben, nämlich dass mit einer Hin- oder Herbewegung der wenigstens einen Tragschiene die alle ersten Halteelemente aller ersten sowie alle zweiten Halteelementpaare der Tragschiene zusammen bewegt werden.

Eine weitere Variante des Gurtniederhalter sieht vor, dass das Montageelement Ausnehmungen oder Löcher aufweist, die für die Aufnahme von zweiten Verbindungsmitteln geeignet und angepasst sind. Die zweiten Verbindungsmittel sind dafür vorgesehen, das Montageelement - und damit den Gurtniederhalter insgesamt - mit einer Rahmenwand eines Grundrahmens des Gurtförderers zu verbinden. Um den Gurtniederhalter an einer bestimmten Position zu fixieren, werden als zweite Verbindungsmittel insbesondere Schrauben mit speziellen Muttern eingesetzt, deren Form auf bestimmte Nuten in der Rahmenwand angepasst sind, sodass die speziellen Muttern und die Nuten eine formschlüssige Verbindung bilden, zum Beispiel eine schwalbenschwanzartige Verbindung. Mit den entsprechenden Schrauben kann der Gurtniederhalter dann an einer gewünschten Position entlang der Nut positioniert werden. Die besagten Schrauben sind dann durch die Ausnehmungen oder Löcher mit dem Montageelement verbunden, sodass das der Gurtniederhalter insgesamt fest an der gewünschten Position fixiert ist.

Außerdem ist es für den Gurtniederhalter auch vorgesehen, dass das Montageelement und/oder die Tragschiene eine Schiene, aus einer U-Schiene hergestellt oder ein Rahmen ist, sodass eine Herstellung des Gurtniederhalters mit besonders einfachen, standardisierten Bauelementen möglich ist.

Eine weitere vorteilhafte Ausgestaltung des Gurtniederhalters ist erreicht, wenn die längserstreckte Tragschiene als eine längserstreckte erste sowie als eine längserstreckte zweite Teiltragschiene ausgestaltet ist, wenn jede Teiltragschiene mit dem Montageelement verbunden ist, so dass deren gedachten Achsen ihrer Längserstreckungen parallel zueinander gelegen sind, wenn die Teiltragschienen in Richtung ihrer Längserstreckung bedarfsweise relativ zum Montageelement und separat voneinander hin- oder herbewegbar ins, wenn das erste Halteelemente des zur Stirnseite näher gelegenen Halteelementpaares mit der ersten Teiltragschiene verbunden ist, dass das erste Halteelemente des anderen Halteelementpaares mit der zweiten Teiltragschiene verbunden ist, und wenn jede Teiltragschiene an je wenigstens einer vorbestimmten Position mittels der ersten Verbindungsmittel an dem Montageelement fixierbar ist, so dass die ersten und zweiten Halteelemente jedes Halteelementpaares wenigstens mit dem vorgegeben lichten Abstand zueinander fixierbar sind.

Bei dieser Ausgestaltungsvariante weist die Tragschiene zwei Teiltragschienen auf, von denen jede eine der ersten Halteelemente bewegen kann. Das ergibt den besonderen Vorteil, dass beide ersten Halteelemente von einer Seite aus, nämlich der Stirnseite, bewegt werden können, sodass die erfindungsgemäßen Vorteile alle erreicht sind. Zudem ergibt sich ein weiterer Vorteil, nämlich dass die ersten Halteelemente unabhängig voneinander, also jedes erste Halteelemente einzeln und separat bewegbar sind. Somit ist jedes einzelne erste Halteelemente auch zeitlich unabhängig voneinander bewegbar. Auch mit dieser Ausgestaltungsvariante ist es ermöglicht, dass beispielsweise bei einem Gurtwechsel ein Gurtkantenprofil des neuen Gurtes zwischen die Halteelemente eines Halteelementpaars des Untertrums eingefädelt und dann durch Schließen des betreffenden Halteelementpaares fixiert wird. Danach wird das Gurtkantenprofil dann zwischen die Halteelemente des Halteelementpaars des Obertrums eingefädelt und fixiert. Auf diese Weise ist die Gefahr eines unbeabsichtigten Herausrutschens des Gurtkantenprofils aus den Halteelementen des Untertrums beim Einfädeln des Gurtkantenprofils zwischen die Halteelemente des Obertrums minimiert.

Zudem wird die Aufgabe gelöst durch einen Gurtförderer mit einem Endlos-Fördergurt, wobei der Fördergurt zwischen zwei Umlenktrommeln unter einer vorgegebenen Spannung gehalten ist, wobei wenigstens eine der Umlenktrommeln als Antriebstrommel ausgestaltet ist, wobei ein Gurtkantenprofil wenigstens mit einer der beiden seitlichen Gurtkanten des Fördergurtes verbunden ist, wobei eine Anzahl von Gurtniederhaltern wenigstens an einer der Rahmenwände eines Grundrahmens angeordnet ist zu der das wenigstens eine Gurtkantenprofil weist, wobei durch die Rahmenwände eine Förderstrecke seitlich begrenzt ist, wobei die beiden Halteelemente jedes Halteelementpaares jedes Gurtniederhalters mit jeweils dem vorgegeben lichten Abstand beabstandet sind, wobei ein Gurtkantenprofil zwischen den beiden Halteelementen jedes Halteelementpaares angeordnet und geführt ist, dadurch gekennzeichnet, dass die Gurtniederhalter erfindungsgemäße Gurtniederhalter sind.

Die erfindungsgemäßen Vorteile des Gurtniederhalters sind - wie leicht ersichtlich ist, beispielsweise beim Wechsel des Fördergurtes bei einem Gurtförderer - durch den Einsatz von erfindungsgemäßen, die vorstehend genannten Ausgestaltungsmerkmalen aufweisenden Gurtniederhaltern, besonders einfach erreicht. In der Regel sind eine Vielzahl von Gurtniederhaltern in einem solchen Gurtförderer verbaut, sodass sich insbesondere der zeitliche Vorteil bei einer Montage oder Demontage des Fördergurtes entsprechend vervielfältigt. Gurtniederhalter und Gurtkantenprofile können auf einer oder auf beiden Seiten, beispielsweise einer geraden Förderstecke angebracht sein, insbesondere dann, wenn aufgrund der Belastung des Fördergurtes durch ein zu transportierendes Fördergut oder wenn aufgrund der geometrischen bzw. konstruktiven Verhältnisse am Gurtförderer Kräfte quer zur Förderbewegung des Fördergurtes entlang seiner Förderstrecke auftreten können, so dass die Gefahr einer unerwünschten Bewegung quer zur Förderbewegung besteht.

Eine besonders bevorzugte Ausgestaltungsalternative des Gurtförderers sieht vor, dass die Förderstrecke eine Richtungsänderung aufweist, die wenigstens einem in horizontaler Richtung orientierten Richtungsänderungsanteil hat. Dann weist die Förderstrecke eine Kurve auf, bei der jedenfalls aufgrund der geometrischen bzw. konstruktiven Verhältnisse am Gurtförderer Kräfte quer zur Förderbewegung des Fördergurtes entlang seiner Förderstrecke auftreten. Dann wird bevorzugt an der radial äußeren Gurtkante des Fördergutes ein Gurtkantenprofil angebracht sein, das zwischen den Halteelementen der erfindungsgemäßen Gurtniederhaltern geführt und gehalten ist.

Eine bevorzugte Variante des Gurtförderers ist auch dadurch gekennzeichnet, dass die Förderstrecke eine Richtungsänderung aufweist, die wenigstens einen in vertikaler Richtung orientierten Richtungsänderungsanteil hat. Neben dem Fördern in einer Kurve, kann der Gurtförderer also auch eine Höhendifferenz überwinden, sodass das zu fördernde Gut, zum Beispiel Schüttgut oder Stückgut, nach dem Durchlaufen des Gurtförderers entweder eine geodätisch höhere oder niedrigere Höhenlage aufweist.

Besonders bevorzugt ist auch ein Gurtförderer, bei dem die Antriebstrommeln und/oder die Umlenktrommeln kreiskegelstumpfförmig sind. Auf diese Weise ist eine besonders günstige Einleitung der Antriebskräfte von der Antriebsrolle in den Fördergurt gewährleistet.

Eine weitere vorteilhafte Ausführungsform des Gurtförderers sieht vor, dass die Querschnittsform der Kontaktflächen der ersten und/oder der zweiten Rollen oder der ersten und/oder zweiten Gleitschiene auf eine Gestalt des Gurtkantenprofils zumindest für einen Bereich der möglichen Berührung zwischen einer Kontaktfläche und des Gurtkantenprofils angepasst ist. Eine Form einer Mantelfläche der ersten und zweiten Rollen ist also auf die Gestalt des Gurtkantenprofils angepasst. Derart sind die Rolleigenschaften der ersten und zweiten Rollen verbessert. Gleichzeitig sind Reibungskräfte zwischen den ersten bzw. zweiten Rollen und dem Gurtkantenprofil minimiert. Zudem können Kräfte, die durch die Geometrie beziehungsweise die Anordnung des Fördergurtes während des Betriebes auf die Rollen wirken besonders vorteilhaft aufgenommen werden.

Weitere vorteilhafte Ausgestaltungsmöglichkeiten sind den weiteren abhängigen Ansprüchen zu entnehmen. Anhand der in den Zeichnungen dargestellten Ausführungsbeispiele sollen die Erfindung, weitere Ausführungsformen und weitere Vorteile näher beschrieben werden, ohne jedoch auf die speziell beschriebenen Ausführungsformen beschränkt zu sein.

Die Erfindung bezieht sich auch auf sämtliche Kombinationen von bevorzugten Ausgestaltungen, soweit diese sich nicht gegenseitig ausschließen.

Es zeigen
- Fig. 1: einen exemplarischen Gurtniederhalter in geöffneter Position,
- Fig. 2: den exemplarischen Gurtniederhalter in geschlossener Position,
- Fig. 3: eine Gesamtansicht auf den beispielhaften Gurtförderer,
- Fig. 4: einen ersten Schnitt mit einer Teilansicht auf den beispielhaften Gurtförderer,
- Fig. 5: einen zweiten Schnitt mit einer weiteren Teilansicht auf einen beispielhaften Gurtförderer,
- Fig. 6: einen exemplarischen zweiten Gurtniederhalter sowie
- Fig. 7: einen exemplarischen dritten Gurtniederhalter.

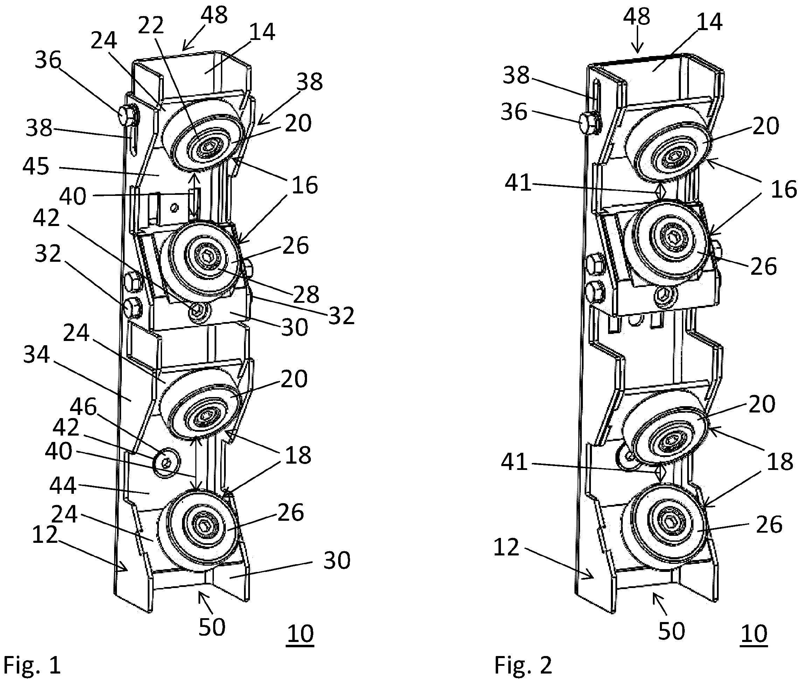

Anhand der Fig. 1 und Fig. 2 sollen zunächst anhand eines exemplarischen Gurtniederhalters 10 der Grundgedanke der Erfindung näher erläutert werden. Dazu zeigt Fig. 1 den Gurtniederhalter 10, der als erstes Bauelement ein Montageelement 12 aufweist, der im gezeigten Ausführungsbeispiel im Wesentlichen als U-Schiene ausgeführt ist, deren seitliche Schenkel entsprechend den konstruktiven und funktionalen Erfordernissen des Gurtniederhalters 10 bearbeitet sind. In dem Montageelement 12 ist eine Tragschiene 14 angeordnet und geführt, die ebenfalls teilweise eine U-förmige Ausgestaltung aufweist. Dabei liegen die beiden gedachten Längsachsen des längserstreckten Montageelements 12 sowie der längserstreckten Tragschiene 14 parallel zueinander. Zudem sind die Abmessungen des Montageelements 12 sowie der Tragschiene 14 aufeinander angepasst, sodass ein Hin- und Hervorschieben der beiden Bauelemente entlang ihrer Längsachsen leicht möglich ist.

In der Fig. 1 stehen die gedachten Längsachsen in Blickrichtung senkrecht, was auch einer häufigen Einbaulage des Gurtniederhalters 10, nämlich in geodätische Richtung gesehen senkrecht entspricht. Der Gurtniederhalter 10 weist ein oberes erstes Rollenpaar 16 als erstes Halteelementpaar sowie ein unteres zweites Rollenpaar 18 als zweites Halteelementpaar auf. Dabei ist eine erste Rolle 20 als erstes Halteelement in einem ersten Wälzlager 22 gelagert, wobei das erste Wälzlager 22 auf einer Lagerplatte 24 angeordnet ist, das wiederum mit der Tragschiene 14 fest verbunden ist. In entsprechender Weise ist eine weitere erste Rolle 20 des zweiten Rollenpaars 18 in einem weiteren Wälzlager 22 gelagert, dass auf einer weiteren Lagerplatte 24 angeordnet ist, wobei diese wiederum mit der Tragschiene 14 fest verbunden ist. Im Ergebnis bedeutet dies, dass bei einer Hin- oder Herbewegung der Tragschiene 14 entlang deren Längsachse die beiden ersten Rollen 20 mit hin- und herbewegt werden. Bei dem gezeigten Gurtniederhalter 10 sind alle Rollen 20, 26 in einer Reihe hintereinander entlang der Längserstreckung des Gurtniederhalters 10 angeordnet.

Eine zweite Rolle 26 als zweites Halteelement des ersten Rollenpaares 16 ist in einem zweiten Wälzlager 28 gelagert, wobei dieses auf einem Lagerbock 30 angeordnet ist. Der Lagerbock 30 ist mittels Schrauben 32 mit zwei Seitenteilen 34 des Montageelements 12 fest verbunden und somit an diesem fixiert. Zudem ist der Lagerbock 30 auf seiner zur einer Bodenplatte 44 weisenden Seite von dieser beabstandet. Der Abstand ist so gewählt, dass er eine Spielpassung für ein Bodenteil 45 der Tragschiene 14 ist, also dass das Bodenteil 45 zwischen der Bodenplatte 44 und der zur Bodenplatte 44 weisenden Seite des Lagerbockes 30 eine Hin- und Herbewegung entlang seiner Längsrichtung durchführen kann, wobei die Tragschiene 14 gleichzeitig in der Hin- oder Herbewegung in seiner Längsrichtung geführt ist. Die zweite Rolle 26 des zweiten Rollenpaares 18 ist ebenfalls mit einem zweiten Wälzlager 28 drehbeweglich gelagert. Jedoch ist dieses zweite Wälzlager 28 an einer weiteren Lagerplatte 24 angebracht, wobei diese wiederum fest mit dem Montageelement 12 verbunden ist. Die jeweiligen zwei zweiten Rollen 26 sind also fest mit dem Montageelement 12 verbunden.

Im gezeigten Ausführungsbeispiel des Gurtniederhalters 10 wird die mögliche Hin- und Herbewegung der Tragschiene 14 auf dem Montageelement 12 begrenzt durch ein erstes Verbindungsmittel 36, das im gewählten Beispiel als metrische Schraube mit passender Mutter ausgestaltet ist. In Verbindung mit Langlöchern 38 in den Seitenteilen 34 durch die die Schraube geführt ist und zudem auch durch zu den Langlöchern 38 korrespondierende Durchgangslöcher in den Seitenwänden der Tragschiene 14 durchgeführt ist. Die Durchgangslöcher sind in dieser Figur jedoch nicht zu sehen, da sie durch die Seitenteile 34 verdeckt sind. Die Durchgangslöcher positionieren die Tragschiene an der Schraube des ersten Verbindungsmittels 26, während die Langlöcher 38 eine Bewegung der Tragschiene 14 relativ zum Montageelement 12 ermöglichen. Diese relative Bewegung der Tragschiene 14 entlang der Langlöcher 38 in ihrer Längsrichtung ist durch die Länge der Langlöcher 38 beschränkt. In dieser Figur ist die Tragschiene 14 in ihrer maximal oberen Position gezeigt, wobei das erste Verbindungsmittel 36 entsprechend am oberen Teil der Langlöcher 38 anliegt. Vorteilhafterweise kann mit der Wahl einer Schrauben-/Mutter-Kombination als erstes Verbindungsmittel 36 die Tragschiene 14 in dieser Position auch durch einfaches Anziehen der Schrauben-/Mutter-Kombination fixiert werden. In der gezeigten Position ist ein lichter Abstand zwischen einer ersten Rollen 20 und einer zweiten Rolle 26 eines Rollenpaares16, 18 gleichzeitig ein maximaler Abstand zwischen den Rollen.

Zudem sind in der Figur Aufnahmelöcher 42 in einer Bodenplatte 44 des Montageelements 12 und im Lagerbock 30 gezeigt, die zur Aufnahme von Verbindungsschrauben als zweite Verbindungsmittel 46 vorgesehen sind. Mit den Verbindungsschrauben ist das Befestigen der Montageschiene und damit des Gurtniederhalters 10 insgesamt an einem Tragrahmen eines Gurtförderers besonders einfach ermöglicht.

Fig. 2 zeigt den Gurtniederhalter 10, bei dem die Tragschiene 14 in einer weiteren Position gezeigt ist, nämlich in der der lichte Abstand zwischen den ersten 20 und den zweiten Rollen 26 als erste und zweite Halteelemente der einzelnen Rollenpaare 16, 18 als Halteelementpaare einen vorgegebenen lichten Abstand 41 zueinander haben. Im gewählten Beispiel ist das ein konstruktiv vorgegebener minimal möglicher lichter Abstand, bei dem das erste Verbindungsmittel 36 am in der Figur unteren Anschlag der Langlöcher 38 angeordnet ist. Alternativ kann der vorgegebene lichte Abstand auch besonders einfach mit einem Rastelement, beispielweise mit einer federbelasteten Kugel oder mit einer federbelasteten Rastnase eingestellt sein, wobei die federbelastete Kugel oder Rastnase an der Tragschiene 14 angebracht ist, und die bei Erreichen des vorgegebenen lichten Abstandes in einer Vertiefung in dem Montageelement einrastet oder einschnappt. Beim Vergleich der Stellungen der Rollen 20, 26 in den Figuren 1 und 2 ist besonders leicht erkennbar, dass mit einer Bewegung der Tragschiene 14 entlang ihrer Längsrichtung der lichte Abstand 40 der Rollen 20, 26 beider Rollenpaare 16, 18 besonders einfach gleichzeitig veränderbar ist. Auf diese Weise kann ein Monteur von einer ersten Stirnseite 48 des Montageelementes 12 , die im gewählten Ausführungsbeispiel oben gelegen ist, mittels einer einfachen Bewegung der Tragschiene 14 sowohl die erste Rolle 20 des ersten Rollenpaares 16 als auch die erste Rolle 20 des zweiten Rollenpaares 18 in eine Position mit einem gewünschten vorgegebenen lichten Abstand 41 - einer sogenannten Geschlossenstellung - der ersten 20 zu den zweiten Rollen 26 verbringen. Vorteilhafterweise muss der Monteur im Bedarfsfalle also weder von einer zweiten Stirnseite 50 noch von einem Bereich zwischen den beiden Rollenpaaren 16, 18 auf die erste Rolle 20 des zweiten Rollenpaares 18 zu zugreifen, wie das seither notwendig war, um diese Rolle zu bewegen. Das ist insbesondere im Falle einer Montage oder Demontage eines Fördergurtes, der zwischen den Rollen gehalten werden soll, von Vorteil. Es ist auch innerhalb des Erfindungsgedankens, dass der Gurtniederhalter 10 in einer anderen Ausrichtung zum Beispiel an eine Tragrahmenwand eines Gurtförderers montiert wird, also beispielsweise, dass die erste Stirnseite 48 nicht wie im Ausführungsbeispiel dargestellt oben gelegen ist, sondern unten gelegen wäre, sodass das Öffnen oder Schließen, also das hin oder herbewegen der Tragschiene 14, von unten erfolgt anstatt gemäß Figuren 1, 2 von oben.

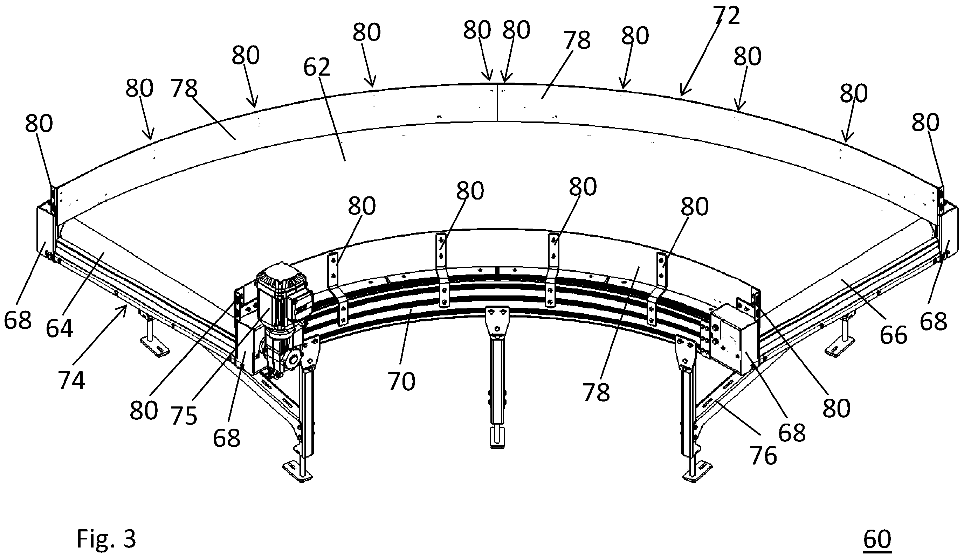

Die Fig. 3 zeigt einen Gurtförderer 60 mit einem Fördergurt 62, der im gewählten Ausführungsbeispiel in einer kreisförmigen Kurve fördert, also eine entsprechende Richtungsänderung in horizontaler Richtung aufweist, und dazu entsprechend einer Mantelfläche eines Kegelstumpfes - kurz in kegelförmig - geschnitten ist. In der Figur ist eine Förderkurve von 90° gezeigt, wobei die Förderkurve leicht auf die Förderaufgabe anpassbar ist, und der Art beispielsweise ohne weiteres einen Winkel zwischen 5 Grad und 355° als Förderkurve aufweisen kann. Der Fördergurt 62 ist zwischen zwei Umlenktrommeln, im gezeigten Ausführungsbeispiel einer Antriebstrommel 64 und einer Umlenktrommel 66 mit einer vorgebbaren Vorspannung gehalten. Dabei ist die Antriebstrommel 64 ebenfalls eine Umlenktrommel für den Fördergurt 62, die jedoch mit einem Antrieb verbunden ist, der die Antriebstrommel 64 bedarfsweise antreibt und derart letztlich den Fördergurt 62 in eine gewünschte Bewegung setzt. Alternativ könnten auch beide Umlenktrommeln mit Antrieben versehen sein, um beispielsweise ein Fördern eines Fördergutes auf seiner Förderstrecke wahlweise in jede der beiden möglichen Bewegungsrichtungen des Fördergurtes 62 zu ermöglichen. Sowohl die Antriebstrommel 64 als auch die Umlenktrommel 66 weisen eine kegelstumpfförmige Gestalt auf, wobei die Steilheit des Kegelstumpfes auf die Förderkurve beziehungsweise auf den Schnitt des Fördergurtes 62 angepasst ist. Die Antriebstrommel 64 und die Umlenktrommel 66 sind zudem in Lagerböcken 68 zwischen - in radialer Richtung der Kurve gesehen - inneren Rahmenwand 70 und einer äußeren Rahmenwand 72 eines Grundrahmens 74 gelagert. Im gezeigten Beispiel wird die Antriebstrommel 64 durch einen elektrisch betriebenen Aufsteckgetriebemotor 75, der an der inneren Rahmenwand 70 angebracht ist, angetrieben. Alternativ kann der Aufsteckgetriebemotor 75 an einer anderen Stelle am Grundrahmen 74 angebracht sein, beispielsweise auch an der äußeren Rahmenwand 72 und dementsprechend seine Antriebskräfte im Bereich eines zur äußeren Rahmenwand 72 weisenden Seite der Antriebstrommel 64 in diese einleiten. Selbstverständlich kann die Antriebstrommel 64 auch mit anderen Antrieben, wie beispielsweise elektrischen Direktantrieben, hydraulischen oder pneumatischen Antrieben angetrieben werden, die an radial inneren oder äußeren Stellen der Antriebstrommel 64 diese antreiben. Der Grundrahmen 74 ist durch ein Gestell 76 vom Boden beabstandet. Je nach gewähltem Abstand zwischen dem Grundrahmen 74 und dem Boden ist die zum Boden weisende Seite des Grundrahmens 74 für Personen nicht zugänglich. In einem solchen Fall müssten Montage oder Wartungsarbeiten am Gurtförderer 60 vorteilhafterweise ausschließlich von oben durchgeführt werden.

Zur radial inneren und äußeren seitlichen Begrenzung der Förderstrecke sind unmittelbar oberhalb des Fördergurtes 62 Begrenzungsbleche 78 mittels einer Anzahl von Halteelementen 80 an der inneren 70 bzw. äußeren Rahmenwand 72 angebracht.

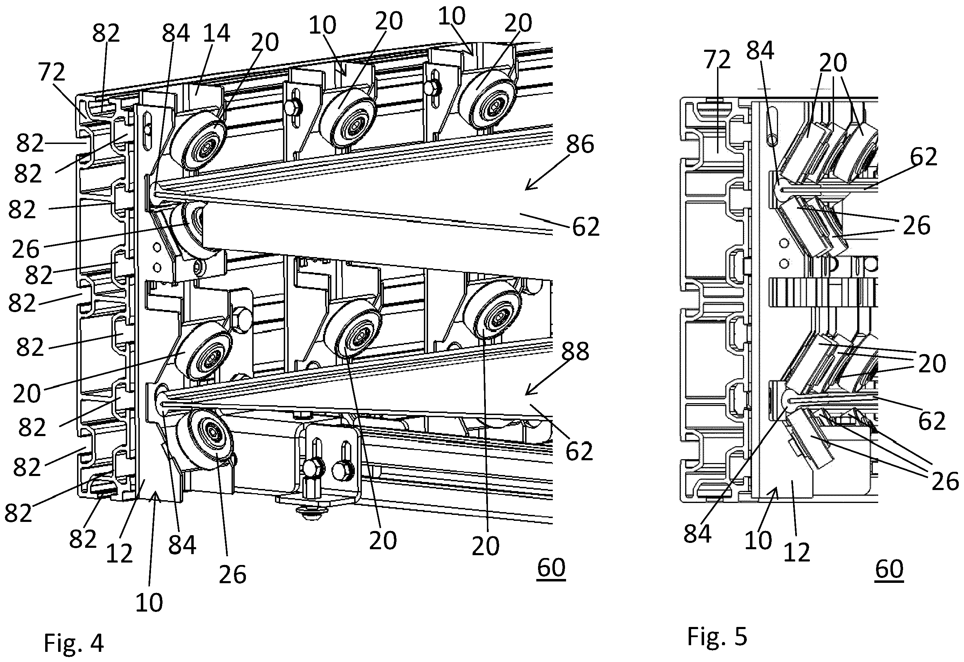

Die Fig. 4 zeigt einen ersten Schnitt mit einer dreidimensionalen Teilansicht auf einen Ausschnitt auf den beispielhaften Gurtförderer 10, wobei der Ausschnitt so gewählt ist, dass mehrere Gurtniederhalter 10 gezeigt sind, die an der äußeren Rahmenwand 72 befestigt sind. Die äußere Rahmenwand 72 ist im gezeigten Ausführungsbeispiel als Aluminiumprofilschiene ausgeführt, die an allen außen gelegenen Seiten Nuten 82 haben, die einen schraubenkopfquerschnittsförmigen Querschnitt aufweisen.

In der Figur ist der Fördergurt 62 gezeigt, auf den Gurtkantenprofile aufgenäht sind. Dabei ist in der Teilansicht lediglich ein radial außen gelegenes Gurtkantenprofil 84 gezeigt, wobei auch die radial innen gelegene Gurtkante ein Gurtkantenprofil haben kann, wobei dies jedoch bei einem Gurtförderer mit Kurve nicht erforderlich ist. Das Gurtkantenprofil 84 weist in etwa einen Querschnitt eines Tropfens auf, wobei dieser an einer zur Gurtkante weisenden Stelle genutet ist. In diese Profilnut ist die radial außengelegene Gurtkante eingeführt und dort vernäht. Dabei stehen dem Fachmann hier verschiedene andere Verbindungstechniken zwischen Gurtkante und Profilnut zur Verfügung, beispielsweise Kleben, Verrasten oder eine formschlüssige oder eine kraftschlüssige Verbindungstechnik. Auch für eine Querschnittsgestalt des Gurtkantenprofils 84 kommen eine Vielzahl von weiteren Formen in Betracht, beispielsweise kreisförmig, oval oder dreieckig etc. Jedenfalls ist es ein technisches Ziel des Gurtkantenprofils den Fördergurt 62 an seinen Gurtkanten zu verdicken.

Der Fördergurt 62 ist zudem in einem Obertrum 86 als auch in einem Untertrum 88 des Gurtförderers 60 gezeigt. Gut erkennbar in dieser Figur ist es, dass der Fördergurt 62 im Obertrum 86 und im Untertrum 88 nicht parallel zueinander gelegen sind, sondern auf einen außerhalb der Figur liegende Kegelspitze weisen, was dem vorstehend beschriebenen Zuschnitt des Fördergurtes 62 geschuldet ist. Das in Fig. 3 beschriebene Begrenzungsblech 78 und die Halter 80 und weitere Details des Gurtförderers 60 sind zur Vereinfachung der Fig. 4 nicht gezeigt. In der Figur soll nämlich vor allem veranschaulicht werden, dass die Gurtniederhalter 10 in einem geöffneten Zustand gezeigt sind, also in einem Zustand, bei dem der lichte Abstand 40 zwischen den ersten Rollen 20 und den zweiten Rollen 26, so groß ist, dass - wie in der Figur leicht erkennbar ist - die größte Querschnittsdicke des Gurtkantenprofils 84 kleiner ist als der lichte Abstand 40. In dieser Stellung der Rollen 20, 26 kann der Fördergurt 62, beispielsweise für eine Erstmontage oder einen Gurtwechsel sowohl aus dem Obertrum 86 als auch aus dem Untertrum 88 entnommen werden und ein neuer Fördergurt 62 entsprechend in den Gurtförderer 60 eingelegt werden.

Die Fig. 5 zeigt einen zweiten Schnitt mit einer weiteren Teilansicht auf den beispielhaften Gurtförderer 60 in einer seitlichen Ansicht, bei dem zum Beispiel im Schnittbild der äußeren Rahmenwand 72 gut erkennbar ist, dass diese entlang ihrer Längserstreckung gekrümmt ist, nämlich im gezeigten Beispiel einer Kreisbahn folgt, da der beispielhafte Gurtförderer 60 eine Gurtkurve aufweist und dafür vorgesehen ist, das Fördergut in einer Kurve zu fördern, also eine Richtungsänderung für das Fördergut zu bewirken.

Im Unterschied zur Fig. 4 zeigt Fig. 5 die ersten Rollen 20 und die zweiten Rollen 26 in dem vorgegebenen lichten Abstand 41 und damit in der Geschlossenstellung der Rollen 20, 26. In der Figur ist auch erkennbar, dass es dem Gurtkantenprofil 84 in dieser Position der Rollen 20, 26 nicht mehr möglich ist, zwischen den Rollen 20, 26 in Richtung des Fördergurtes 62 bzw. in radialer Richtung der Gurtkurve gesehen nach radial innen zu gelangen. Die Gurtniederhalter 10 sorgen also dafür, dass der Fördergurt 62 insgesamt entlang seiner Förderstrecke geführt und entstehende Kräfte in den Grundrahmen 74 eingeleitet werden. Gleichzeitig sorgen die gelagerten Rollen 20, 26 dafür, dass im Falle einer Berührung des Gurtkantenprofils 84 mit den Rollen 20, 26 die Gleit- oder Reibungswiderstände besonders gering sind. Solche Berührungen oder ein Anliegen des Gurtkantenprofils 84 an den Rollen 20, 26 sowohl auf der radial inneren Seite als auch auf der radial äußeren Seite des Fördergurtes 62 treten jedenfalls auf, da dies bei einem kegelförmig geschnittenen Fördergurt 62 konstruktionsbedingt so vorgesehen ist. Durch die Geometrie des Fördergurtes 62 zusammen mit den kegelstumpfförmigen Trommeln, nämlich der Antriebstrommel 64 sowie der Umlenktrommel 66, werden im Falle des Betriebes des Gurtförderers 60 jedenfalls Kräfte auftreten, die den Fördergurt 62 in Richtung eines Kreismittelpunktes der kreisförmigen Richtungsänderung des Fördergurtes ziehen. Diese Kräfte treten im Fördergurt 62 auf und werden über die radial inneren und äußeren Gurtkantenprofile 84 an die Gurtniederhalter 10 übertragen, die dieser aufnimmt und an die Rahmenwände 70, 72 weiterleiten und letztlich über den Grundrahmen 74 und das Gestell 76 in den Boden abgetragen werden.

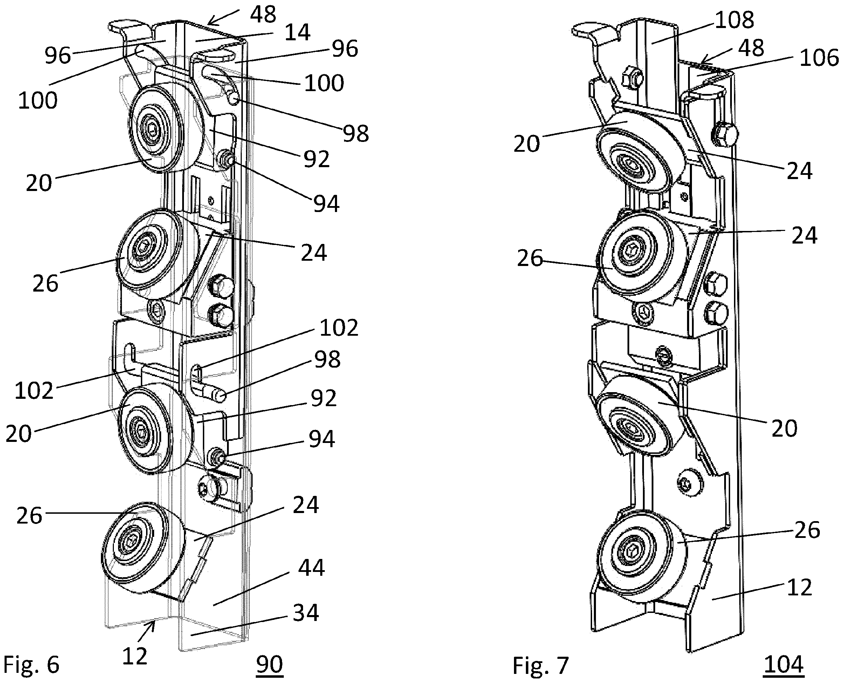

Die Fig. 6 zeigt einen exemplarischen zweiten Gurtniederhalter 90 in einer dreidimensionalen Ansicht bei dem die Tragschiene 14 wie bei dem Gurtniederhalter 10 im Montageelement 12 hin- und her beweglich geführt ist. In dieser Figur werden Bezugszeichen von Bauteilen, die bereits zuvor eingeführt wurden und auch beim zweiten Gurtniederhalter eingesetzt sind, entsprechend verwendet. Zur besseren Visualisierung ist in der Figur die Montageschiene durchscheinend gezeichnet, während die übrigen Bauteile mit festen Umrissen versehen sind.

Auch beim zweiten Gurtniederhalter 90 sind zwei Rollenpaare gezeigt, wobei die jeweils zweiten Rollen 26 der Rollenpaare auf einer Oberseite der Lagerplatten 24 angebracht und diese wiederum mit den Seitenteilen 34 des Montageelements 12 verbunden sind. Die ersten Rollen 20 der Rollenpaare sind ebenfalls auf den Oberseiten von Lagerplatten angebracht, die jedoch als Drehlagerplatten 92 ausgestaltet sind. Die Drehlagerplatten 92 sind jeweils in im ihrem Randbereich, also im Nahbereich von oder unmittelbar an ihrer Drehlagerplattenstirnseite, die am weitesten von der Stirnseite 48 entfernt ist, durch eine Drehwelle 94 drehbeweglich gelagert. Auf diese Weise ist der Drehlagerplatte 92 eine Schwenkbewegung um die Drehwelle 94 ermöglicht.

Im gezeigten Ausführungsbeispiel ist die Drehwelle 94 an ihren stirnseitigen Enden in entsprechenden Bohrungen in den Seitenteilen 34 des Montageelements 12 gelagert. Alternativ kann eine Drehwelle 94 jedoch auch in einem Drehwellenhalter gelagert sein, der mit der Bodenplatte 44 verbunden ist. Auf diese Weise ist es den ersten Rollen 20 ermöglicht eine Schwenk- bzw. Kippbewegung durchzuführen, die den lichten Abstand der ersten 20 und zweiten Rolle 26 jedes Rollenpaares je nach Schwenkstellung verändert. Auf diese Weise ist auch eine Offen- oder Geschlossenstellung eines Rollenpaares zum Beispiel für einen Gurtwechsel am Gurtförderer realisiert.

Eine Drehwelle 94 ist so angebracht, dass eine gedachte Drehachse der Drehwelle 94 sowohl parallel zu einer von der Bodenplatte 44 definierten gedachten Ebene als auch senkrecht zu der Verschieberichtung der Tragschiene 14 gelegen ist. Auf diese Weise ist sichergestellt, dass sich durch die Schwenkbewegung der Schwenklagerplatte 92 auch der lichte Abstand zwischen der ersten 20 und der zweiten Rolle 26 eines Rollenpaares verändert.

Die u-förmige Tragschiene 14 weist zwei Seitenwände 96 auf. Auf jeder der beiden Schwenklagerplattenstirnseiten, die in Richtung der Seitenwände 96 weisen, ist eine Führungsnase 98 angeordnet. An den Stellen in den Seitenwänden 96, an denen Führungsnasen 98 gelegen sind, sind erste Langlöcher 100 für die Führungsnasen 98 an derjenigen Schwenklagerplatte 92 eingebracht, die der Stirnseite 48 am nächsten liegt. Zudem sind an entsprechenden Stellen in den Seitenwänden 96 zweite Langlöcher 102 für die Führungsnasen 98 an der anderen Schwenklagerplatte 92 eingebracht. Die Führungsnasen 98 und die ersten 100 sowie zweiten Langlöcher 102 sind in ihren Positionen und ihrer Dimensionierung so aufeinander angepasst, dass die Führungsnasen 98 in den Langlöchern 100, 102 positioniert sind, so dass bei einer Hin- oder Herbewegung der Tragschiene 14 relativ zum Montageelement 12 auch die Führungsnasen 98 in den Langlöchern 100, 102 hin- oder herbewegt sind. Durch einen Bewegungsanteil der Führungsnasen 98, der senkrecht zu einer durch die Bodenplatte 44 definierten Ebene orientiert ist, ist auch betreffende Stelle Schwenklagerplatte 92, an der die Führungsnase 98 angeordnet ist, in die entsprechende Richtung mitbewegt. Dementsprechend führt die Schwenklagerplatte 92 eine Schwenkbewegung um die Drehwelle 94 aus. Die Stelle der Schwenklagerplatte 92 an der die Drehachse angebracht ist, erfährt nämlich keine signifikante Positionsänderung, sondern lediglich eine Schwenkbewegung um die Drehwelle 94.

Anstatt der Langlöcher 100, 102 können auch Nuten in den Seitenwände 96 der Tragschiene 14 eingebracht sein, beispielsweise wenn die Seitenwände 96 eine ausreichende Dicke aufweisen. In solche Nuten werden die Führungsnasen 98 funktional vergleichbarer gut und sicher geführt wie in den Langlöchern 100, 102, weshalb für diese Erfindung bei der Verwendung des Begriffs Langlöcher auch entsprechende Nuten gemeint sein sollen.

Im gezeigten Ausführungsbeispiel sind die ersten Langlöcher 100 kreisbogenabschnittsförmig ausgestaltet, wobei ein erstes Ende der ersten Langlöcher 100 in der Seitenwand 96 in relativer Nähe zur Bodenplatte 44 angeordnet ist und der Kreisbogenabschnitt dann in Richtung der Stirnseite 48 orientiert ist, sodass ein anderes Ende der ersten Langlöcher 100 weiter von der Bodenplatte 44 entfernt ist als das erste Ende.

Die zweiten Langlöcher 102 sind mit zwei Abschnitten ausgestaltet, die aneinander gesetzt sind. Ein erster Abschnitt weist eine gerade Form auf und erstreckt sich von einem ersten Ende des zweiten Langlochs 102, das vergleichsweise nahe an der Bodenplatte 44 in der Seitenwand 96 angeordnet ist, und erstreckt sich mit einer vorgegebenen Steigung relativ zu einer gedachten Ebene der Bodenplatte 44 in Richtung der Stirnseite 48. Am Ende des ersten Abschnitts geht dieser in den zweiten Abschnitt über, der ebenfalls gerade ist, jedoch in der Seitenwand 96 parallel zur Bodenplatte 44 gelegen ist.

Bei einer Hin- oder Herbewegung der Tragschiene 14 relativ zum Montageelement 12 passiert Folgendes. Die Figur zeigt den zweiten Gurtniederhalter 90 in einer Offenstellung, bei der die ersten Rollen 20 sowie die zweiten Rollen 26 jedes Rollenpaar einen konstruktive maximalen lichten Abstand zueinander aufweisen. Wird nun die Tragschiene 14 - in dieser Figur gesehen - nach unten und damit relativ zum Montageelement 12 bewegt, bewegen sich auch die Führungsnasen entlang der ersten 100 sowie der zweiten Langlöcher 102. Die ersten 100 sowie die zweiten Langlöcher 102 weisen eine unterschiedliche Form auf. Der jeweiligen Form bzw. der jeweiligen Steigung eines Langlochs entsprechend werden die Führungsnasen 98 unterschiedlich weit verschwenkt bei einer bestimmten Stecke einer Hin- oder Herbewegung der Tragschiene 14. Dementsprechend können auch die Schwenkstellungen der beiden Schwenklagerplatten 92 bei einer bestimmten Hin- oder Herbewegung der Tragschiene 14 unterschiedlich ausfallen. Der zweite, parallel zur Bodenplatte 44 gelegene Abschnitt des zweiten Langloches 102 belässt die betreffende Schwenklagerplatte 92 in ihrer Schwenkstellung bei einer Hin- oder Herbewegung der Führungsnase entlang dieses zweiten Abschnitts. Auf diese Weise ist es besonders einfach, nämlich durch unterschiedliche Gestaltung des ersten 100 sowie des zweiten Langloches 102 die Schwenkbewegung der einen Schwenklagerplatte 92 im Vergleich zu der anderen Schwenkleiterplatte 92 unterschiedlich zu gestalten.

Im gezeigten Beispiel werden beide in der Figur gezeigten ersten Rollen 20 sich auf die zweiten Rollen 26 zubewegen, sobald die Tragschiene 14 in der Figur in Richtung nach unten aus ihrer Offenstellung in Richtung einer Geschlossenstellung bewegt wird. Durch die unterschiedlichen Steigungen des ersten Langlochs 100 im Vergleich zum zweiten Langloch 102 wird die untere der ersten Rollen 20 bereits in ihrer Geschlossenstellung positioniert sein, während die obere erste Rolle 20 erst teilweise geöffnet ist, wenn die Tragschiene 14 um eine bestimmte Strecke verschoben ist. Das bedeutet_ beispielsweise für die Montage eines neuen Gurtes im zweiten Gurtniederhalter 90, dass der neue Gurt im Untertrum bereits zwischen der ersten 20 und der zweiten Rolle 26 des Untertrums schon fixiert und im Gurtniederhalter zwischen den Rollen 20, 26 gehalten ist, während der neue Gurt im Obertrum noch einfädelbar oder montierbar ist, da die dortigen ersten 20 und zweiten Rollen 26 sich noch nicht in ihrer geschlossen-Stellung befinden.

Hier bietet sich dem Konstrukteur eine Vielzahl von Möglichkeiten die Schwenkbewegung der beiden Schwenklagerplatten 92 separat voneinander zu gestalten.

Die Fig. 7 zeigt einen exemplarischen dritten Gurtniederhalter 104 in einer dreidimensionalen Ansicht bei dem die Tragschiene 14 eine erste Teiltragschiene 106 sowie eine zweite Teiltragschiene 108 aufweist. Beide Teiltragschienen 106, 108 zusammen haben also die gleiche Funktionalität wie die Tragschiene 14. Beide Teiltragschienen 106, 108 sind mit dem Montageelement 12 verbunden, jedoch so ausgestaltet, dass sie eine separate und voneinander unabhängige Hin- und Herbewegung in Richtung ihrer Längserstreckung vornehmen können und auch separat mit den Verbindungsmitteln fixierbar sind.

Diejenige Lagerplatte 24 der ersten Rolle 20, die näher zur Stirnseite 48 angeordnet ist, ist mit einer ersten Seitenwand der ersten Teiltragschienen 106 verbunden, sodass bei einer Hin- und Herbewegung der ersten Teiltragschiene 106 auch die entsprechende Lagerplatte 24 hin- und herbewegt wird. Auf der Oberseite dieser Lagerplatte 24 ist eine erste Rolle 20 angeordnet, die entsprechend mitbewegt wird, sodass sich auch der lichte Abstand zwischen dieser ersten Rolle 20 und der zweiten Rolle 26 dieses Rollenpaares entsprechend ändert.

Diejenige Lagerplatte 24 der ersten Rolle 20, die weiter entfernt zur Stirnseite 48 angeordnet ist, ist mit einer zweiten Seitenwand der zweiten Teiltragschiene 108 verbunden, sodass mit einer Hin- und Herbewegung der zweiten Teiltragschiene 108 auch die entsprechende Lagerplatte 24 hin- und herbewegt wird. Auf der Oberseite dieser Lagerplatte 24 ist ebenfalls eine erste Rolle 20 angeordnet, die entsprechend mitbewegt wird, sodass sich auch der lichte Abstand zwischen dieser ersten Rolle 20 und der zweiten Rolle 26 dieses Rollenpaares entsprechend ändert.

Beide ersten Rollen 20 sind also unabhängig voneinander hin- und herbewegbar, jedoch können beide Hin- und Herbewegungen von einer Seite aus, nämlich von der Stirnseite 48 aus vorgenommen werden können. So ist erreicht, dass die lichten Abstände der Rollen 20, 26 jedes Rollenpaares sowohl gleichzeitig oder auch zeitlich unabhängig voneinander einstellbar sind, als auch jeder der lichten Abstände der Rollenpaare unabhängig voneinander.

### Bezugszeichenliste

- 10: Gurtniederhalter
- 12: Montageelement
- 14: Tragschiene
- 16: erstes Rollenpaar
- 18: zweites Rollenpaar
- 20: erste Rolle
- 22: erstes Wälzlager
- 24: Lagerplatte
- 26: zweite Rolle
- 28: zweites Wälzlager
- 30: Lagerbock
- 32: Schrauben
- 34: Seitenteil
- 36: erstes Verbindungsmittel
- 38: Langlöcher
- 40: lichter Abstand
- 41: vorgegebener lichter Abstand
- 42: Aufnahmelöcher
- 44: Bodenplatte
- 45: Bodenteil
- 46: zweite Verbindungsmittel
- 48: erste Stirnseite
- 50: zweite Stirnseite
- 60: Gurtförderer
- 62: Fördergurt
- 64: Antriebstrommel
- 66: Umlenktrommel
- 68: Lagerbock
- 70: innere Rahmenwand
- 72: äußere Rahmenwand
- 74: Grundrahmen
- 75: Aufsteckgetriebemotor
- 76: Gestell
- 78: Begrenzung Blech
- 80: Halteelemente
- 82: Nut
- 84: Gurtkantenprofil
- 86: Obertrum
- 88: Untertrum
- 90: zweiter Gurtniederhalter
- 92: Drehlagerplatte
- 94: Drehwelle
- 96: Seitenwand
- 98: Führungsnase
- 100: erste Langlöcher
- 102: zweite Langlöcher
- 104: dritter Gurtniederhalter
- 106: erste Teiltragschienen
- 108: zweite Teiltragschienen

## Patentansprüche

1. Gurtniederhalter (10) für einen Gurtförderer (60), wobei auf einem längserstreckten Montageelement (12) wenigstens zwei Halteelementpaare in Richtung seiner Längserstreckung gesehen hintereinander angeordnet sind, wobei jedes Halteelementpaar ein erstes und ein zweites Halteelement aufweist, wobei das jeweils erste Halteelement näher zu einer ersten Stirnseite (48) des Montageelementes (12) gelegen ist als das jeweils zweite Halteelement eines Halteelementpaares, wobei das erste und das zweite Halteelement eines Halteelementpaares in einer Geschlossenstellung einen vorgegebenen lichten Abstand (41) zueinander haben,
**dadurch gekennzeichnet, dass**
eine längserstreckte Tragschiene (14) mit dem Montageelement (12) verbunden ist, so dass deren gedachten Achsen ihrer Längserstreckung parallel zueinander gelegen sind, dass die Tragschiene (14) in Richtung ihrer Längserstreckung bedarfsweise relativ zum Montageelement (12) verschiebbar ist, dass die jeweils ersten Halteelemente mit der Tragschiene (14) verbunden sind, dass die jeweils zweiten Halteelemente mit dem Montagelement (12) verbunden sind, dass die Tragschiene (14) an wenigstens einer vorbestimmten Position mittels erster Verbindungsmittel an dem Montageelement (12) fixierbar ist, so dass die ersten und zweiten Halteelemente wenigstens mit dem vorgegeben lichten Abstand (41) zueinander fixierbar sind.

2. Gurtniederhalter (10) nach Anspruch 1, **dadurch gekennzeichnet, dass** das erste Halteelement als erste Rolle (20) oder als erste Gleitschiene und/oder das zweite Halteelement als zweite Rolle (26) oder als zweite Gleitschiene ausgestaltet ist.

3. Gurtniederhalter (10) nach Anspruch 2, **dadurch gekennzeichnet, dass** die ersten (20) und/oder die zweiten Rollen (26) drehbeweglich gelagert sind.

4. Gurtniederhalter (10) nach Anspruch 2 oder 3, **dadurch gekennzeichnet, dass** eine radial nach außen weisende Kontaktfläche der ersten (20) und/oder der zweiten Rollen (26) als Querschnittsform in radialer Richtung gesehen eine gerade, eine konkav geformte, eine konvex geformte oder eine freigeformte Stecke ist, oder dass die Kontaktfläche der ersten und/oder zweiten Gleitschiene in deren longitudinaler Erstreckungsrichtung als Querschnittsform eine konkav geformte, eine konvex geformte oder eine freigeformte Stecke ist.

5. Gurtniederhalter (10) nach einem der vorherigen Ansprüche, **dadurch gekennzeichnet, dass**
die ersten und/oder die zweiten Halteelemente unter Zwischenfügung einer Lagerplatte (24) oder eines Lagerbocks (30) mit der Tragschiene (14) beziehungsweise dem Montagelement (12) verbunden sind; und/oder
ein Winkel zwischen einer gedachten Symmetrie- oder Drehachse dem ersten und/oder dem zweiten Halteelement sowie der Richtung der Längserstreckung des Montageelements (12) einstellbar ist.

6. Gurtniederhalter (10) nach Anspruch 5, **dadurch gekennzeichnet, dass** jede Lagerplatte (24) eines ersten Halteelementes eine Schwenklagerplatte (92) ist, dass jede Schwenklagerplatte (92) im Randbereich einer Schwenkplattenstirnseite, die am weitesten von der Stirnseite (48) gelegen ist, eine Drehwelle (94) aufweist, dass die Drehwelle (94) in den Seitenteilen (34) oder in einem mit der Bodenplatte (44) verbundenen Drehwellenhalter verschwenkbar gelagert ist, dass eine gedachte Drehachse der Drehwelle (94) parallel zu einer von der Bodenplatte (44) definierten Ebene sowie_ senkrecht zur Verschieberichtung der Tragschiene (14) gelegen ist, dass jede Schwenklagerplatte (92) wenigstens eine zu einer Seitenwand (96) der Tragschiene (14) weisenden Führungsnase (98) aufweist, dass in jeder der zwei Seitenwände (96) der Tragschiene (14) von der zur Stirnseite (48) näher gelegenen Schwenklagerplatte (92) ein erstes Langloch (100) angeordnet ist, dass in jeder der beiden Seitenwände (96) von der zur Stirnseite (48) weiter entfernt gelegenen Schwenklagerplatte (92) ein zweites Langloch (102) angeordnet ist, dass die ersten (100) und die zweiten Langlöcher (102) so positioniert sind, dass die wenigstens eine Führungsnase (98) der einen Schwenklagerplatte (92) in wenigstens einem ersten Langloch (100) und die wenigstens eine Führungsnase (98) der anderen Schwenklagerplatte (92) in wenigstens einem zweiten Langloch (102) gelegen ist, dass die Langlöcher (100, 102) eine solche Gestalt aufweisen, dass durch die relative Verschiebung der Tragschiene (14) zum Montageelement (12) je nach Verschieberichtung die Führungsnasen in den Langlöchern (100, 102) entlangbewegt sind und derart die Schwenklagerplatten (92) entsprechend hin- oder herverschwenkt sind.

7. Gurtniederhalter (10) nach Anspruch 6, **dadurch gekennzeichnet, dass** die zwei ersten Langlöcher (100) die gleiche Gestalt aufweisen, dass die zwei zweiten Langlöcher (102) die gleiche Gestalt aufweisen, dass die ersten (100) oder zweiten Langlöcher (102) eine kreisbogenabschnittsförmige oder eine gerade Gestalt oder eine Kombination dieser Gestalten oder eine Freiform aufweisen, und dass ein erstes Ende eines jeden Langloches (100, 102) näher zur Bodenplatte (44) gelegen ist als ein zweites Ende des betreffenden Langloches (100, 102).

8. Gurtniederhalter (10) nach Anspruch 7, **dadurch gekennzeichnet, dass** die ersten Langlöcher (100) eine kreisbogenabschnittsförmige oder eine gerade Gestalt haben, dass die zweiten Langlöcher (102) einen Abschnitt mit einer kreisbogenabschnittsförmigen oder geraden Gestalt haben an den sich ein weiteren Abschnitt mit einer geraden Gestalt anschließt, dass der weitere Abschnitt an einem am weitesten von der Bodenplatte (44) entfernten Ende des einen Abschnitts anschließt und dass der weitere Abschnitt parallel zur Verschieberichtung der Tragschiene (14) gelegen ist.

9. Gurtniederhalter (10) nach einem der vorherigen Ansprüche, **dadurch gekennzeichnet, dass** die ersten Verbindungsmittel (36) eine Schraub-, Rast- und/oder Klemmverbindung ist, wobei bevorzugt
in der Tragschiene (14) wenigstens ein Durchgangsloch oder/und ein Langloch (38) sowie im Montageelement (12) wenigstens ein Langloch (38) und/oder ein Durchgangsloch derart angeordnet sind, dass mit einer Schraube, die durch korrespondierende Durchgangs- und Langlöcher (38) im Montageelement (12) und der Tragschiene (14) geführt ist, die relative Verschiebung der Tragschiene (14) zum Montageelement (12) durch eine Länge des wenigstens einen Langloches (38) begrenzt ist, und dass mit einer Schrauben/Mutter-Kombination als Schraubverbindung die Tragschiene (14) an jeder beliebigen Position innerhalb einer Verschiebestrecke entlang der Langlöcher (38) an dem Montageelement (12) fixierbar ist;
oder
die Tragschiene (14) mit wenigstens einem Rastelement ausgestattet ist, und dass wenigstens zwei zweite Ausnehmungen je Rastelement am Montageelement (12) so angeordnet sind, dass eine Rastnase bedarfsweise in der einen oder der anderen zweiten Ausnehmung verrastbar ist.

10. Gurtniederhalter (10) nach einem der vorherigen Ansprüche, **dadurch gekennzeichnet, dass** auf dem Montageelement (12) wenigstens zwei weitere Halteelementpaare in Richtung der Längserstreckung der Tragschiene (14) gesehen hintereinander angeordnet sind, dass die wenigstens zwei weitere Halteelementpaare in Quererstreckung der Tragschiene (14) gesehen neben den wenigstens zwei Halteelementpaaren angeordnet sind, dass die jeweils ersten Halteelemente der weiteren Halteelementpaare mit der Tragschiene (14) verbunden sind, und dass die jeweils zweiten Halteelement der weiteren Halteelementpaare mit dem Montagelement (12) verbunden sind.

11. Gurtniederhalter (10) nach einem der vorherigen Ansprüche, **dadurch gekennzeichnet, dass** das Montageelement (12) Aufnahmelöcher (42) aufweist, die für die Aufnahme von zweiten Verbindungsmitteln (46) geeignet und formangepasst sind, und/oder dass das Montageelement (12) und/oder die Tragschiene (14) eine Schiene, aus einer U-Schiene hergestellt oder ein Rahmen ist.

12. Gurtniederhalter (10) nach einem der vorherigen Ansprüche, **dadurch gekennzeichnet, dass** die längserstreckte Tragschiene (14) als eine längserstreckte erste (106) sowie als eine längserstreckte zweite Teiltragschiene (108) ausgestaltet ist, dass jede Teiltragschiene (106, 108) mit dem Montageelement (12) verbunden ist, so dass deren gedachten Achsen ihrer Längserstreckungen parallel zueinander gelegen sind, dass die Teiltragschienen (106, 108) in Richtung ihrer Längserstreckung bedarfsweise relativ zum Montageelement (12) und separat voneinander hin- oder herbewegbar ins, dass das erste Halteelemente des zur Stirnseite (48) näher gelegenen Halteelementpaares mit der ersten Teiltragschiene (106) verbunden ist,
dass das erste Halteelemente des anderen Halteelementpaares mit der zweiten Teiltragschiene (108) verbunden ist,
dass jede Teiltragschiene (106, 108) an je wenigstens einer vorbestimmten Position mittels der ersten Verbindungsmittel an dem Montageelement (12) fixierbar ist, so dass die ersten und zweiten Halteelemente jedes_ Halteelementpaares wenigstens mit dem vorgegeben lichten Abstand (41) zueinander fixierbar sind.

13. Gurtförderer (60) mit einem Endlos-Fördergurt (62), wobei der Fördergurt (62) zwischen zwei Umlenktrommeln (66) unter einer vorgegebenen Spannung gehalten ist, wobei wenigstens eine der Umlenktrommeln (66) einen Antrieb aufweist, wobei ein Gurtkantenprofil (84) wenigstens mit einer der beiden seitlichen Gurtkanten des Fördergurtes (62) verbunden ist, wobei eine Anzahl von Gurtniederhaltern (10) wenigstens an einer der Rahmenwände (70, 72) eines Grundrahmens (74) angeordnet sind zu der das wenigstens eine Gurtkantenprofil weist wobei durch die Rahmenwände (70, 72) eine Förderstrecke seitlich begrenzt ist, wobei die beiden Halteelemente eines jeden Halteelementpaares jedes Gurtniederhalters (10) mit dem vorgegeben lichten Abstand (41) beabstandet sind, wobei ein Gurtkantenprofil (84) zwischen den beiden Halteelementen jedes Halteelementpaares angeordnet und geführt ist,
**dadurch gekennzeichnet, dass**
die Gurtniederhalter (10) nach einem der vorherigen Ansprüche ausgestaltet sind.

14. Gurtförderer (60) nach Anspruch 13, **dadurch gekennzeichnet, dass** die Förderstrecke eine Richtungsänderung aufweist, die wenigstens einem in horizontaler Richtung orientierten Richtungsänderungsanteil hat, und/oder dass die Förderstrecke eine Richtungsänderung aufweist, die wenigstens einem in vertikaler Richtung orientierten Richtungsänderungsanteil hat, und/oder dass die Antriebstrommeln (64) und/oder die Umlenktrommeln (66) kreiskegelstumpfförmig sind.

15. Gurtförderer (60) nach Anspruch 4 und einem der Ansprüche 13 oder 14, **dadurch gekennzeichnet, dass** ein erstes Halteelement eines Halteelementpaares als erste Rolle (20) oder als erste Gleitschiene und/oder ein zweites Halteelement eines Halteelementpaares als zweite Rolle (26) oder als zweite Gleitschiene ausgestaltet ist, wobei vorzugsweise die Querschnittsform der Kontaktflächen der ersten (20) und/oder der zweiten Rollen (26) oder der ersten und/oder zweiten Gleitschiene auf eine Gestalt des Gurtkantenprofils (84) zumindest für einen Bereich der möglichen Berührung zwischen einer Kontaktfläche und dem Gurtkantenprofil (84) angepasst ist.
